# EUROPÄISCHE PATENTANMELDUNG

(11) **EP 0 856 378 A2**
(43) Veröffentlichungstag der Anmeldung: **05.08.1998**
(21) Anmeldenummer: 98101430.1
(22) Anmeldetag: 28.01.1998
(51) Int. Cl.: B23Q 17/20

(54) **Werkzeug mit Messeinrichtung**

(30) Priorität: 31.01.1997 DE 29701640 U
(71) Anmelder: Aulenback, Paul, 67500 Haguenau (FR)
(72) Erfinder: Aulenback, Paul, 67500 Haguenau (FR)
(74) Vertreter: Hiebsch, Gerhard F., Dipl.-Ing.

(57) **Zusammenfassung**

Bei einem Werkzeug mit Meßeinrichtung/en und wenigstens einer linearen Anlagekante sowie einem Durchbruch (18) zum Anschluß an ein weiteres Werkzeug oder Werkzeugteil, enthält die Meßeinrichtung (23) lineare Längenmeßeinheiten an einer Meßebene (24,99) und/oder wenigstens eine Libelle. Das Werkzeug hat die Form eines Haltegriffes mit einer Außenflächen (24) als Meßebene, wobei der Durchbruch (18) mit größenveränderbarem Durchmesser als Lager für ein darin drehbares und lösbar angebrachtes Gegenelement (104) des weiteren Werkzeuges oder Werkzeugteils (96) gestaltet ist. Dieses weitere Werkzeug (96) ist ein Aufnahmegehäuse für Zubehörteile mit wenigstens einer linearen Längenmeßeinheit (23) sowie mit einem zylindrischen Zapfen (104) als Gegenelement für den Durchbruch (18). Der Zapfen (104) weist an seiner Stirnfläche (108) eine Gradeinteilung (106) auf, die mit Markierungen am Rande des Durchbruches (18) zusammenwirkt.

## Beschreibung

Die Erfindung betrifft ein Werkzeug mit Meßeinrichtung/en und wenigstens einer linearen Anlagekante sowie einem Durchbruch zum Anschluß an ein weiteres Werkzeug oder Werkzeugteil.

Derartige Werkzeuge sind beispielsweise als linealartige Meßeinrichtung an sog. Sinus-Winkelmessern bekannt und werden an einer Sockelplatte mittels eines jenen Durchbruch durchsetzenden Schraubbolzens gehalten. Das schwenkbare Lineal ist in jeder Stellung blockierbar, und die Sockelplatte dient als Eichwinkel. Mit dieser Vorrichtung sind beliebige Winkel bis 180° leicht zu kontrollieren.

In Kenntnis diese Standes der Technik hat sich der Erfinder das Ziel gesetzt, das Einsatzgebiet eines derartigen Werkzeuges zu erweitern, möglichst viele Meßmöglichkeiten zu integrieren sowie die Handhabung zu verbessern.

Zur Lösung dieser Aufgabe führt die Lehre nach dem unabhängigen Anspruch; die Unteransprüche geben günstige Weiterbildungen an.

Erfindungsgemäß enthält die Meßeinrichtung lineare Längenmeßeinheiten an einer Meßebene und/oder wenigstens eine Libelle, und ihr Durchbruch ist als Lager für ein darin drehbares sowie lösbar angebrachtes Gegenelement des weiteren Werkzeuges oder Werkzeugteiles ausgebildet. Es entsteht auf diese Weise eine Art von Schmiege aus zwei gegeneinander verschwenkbaren Schenkeln; damit lassen sich Winkel einstellen und messen, die geschlossene Flächen zueinander einnehmen, beispielsweise zwischen einer Phase und der zugehörigen Werkstückoberfläche. Darüber hinaus ist ein Vorteil des erfindungsgemäßen Werkzeuges, daß die Teile dieser Schmiege -- also einerseits das Werkzeug mit dem Durchbruch sowie anderseits das Werkzeug mit dem drehbaren Gegenelement -- getrennt voneinander eingesetzt zu werden vermögen.

So hat es sich als günstig erwiesen, das in den Durchbruch eingreifende Werkzeug als Aufnahmegehäuse für Zubehörteile mit wenigstens einer linearen Längenmeßeinheit auszubilden sowie mit einem zylindrischen Zapfen als jenes Gegenelement für den Durchbruch des ersten Werkzeugs. Dieser Zapfen soll an seiner Stirnfläche mit einer Gradeinteilung versehen sein, um den Winkel zwischen beiden Werkzeugen problemlos erkennen und einstellen zu können.

Es ist auch denkbar, dem Aufnahmegehäuse eine nach DE-U-295 14 624 stufenartige Meßleiste zuzuordnen.

Bevorzugt wird das den Durchbruch enthaltende Werkzeug in der Form eines Handgriffes ausgestaltet sowie zumindest an einer seiner Außenflächen mit einer Meßebene versehen; an der dieser Meßebene gegenüberliegenden Außenfläche; die zur Anlage der Hand eine geschwungene Kontur bildet, soll vorteilhafterweise eine drehbare Trageinheit für die parallel zur Außenfläche verlaufende Libelle angeordnet sein. Dieses Werkzeug zeichnet sich -- auch als Teil der beschriebenen Schmiege -- durch einen größenveränderbaren Durchmesser des Durchbruches aus, der zur Aufnahme des Gegenelementes in der Art eines Spannringes zu betätigen ist.

Der Vorzug dieser Ausgestaltung ist, daß das den Durchbruch anbietende Werkzeug zusätzlich als Haltegriff für eine Handbohrmaschine einsetzbar ist; der Durchbruch mit größenveränderbarem Durchmesser kann den Halsabschnitt dieser Handbohrmaschine aufnehmen.

Einen Haltegriff für eine Handbohrmaschine mit größenveränderbarem Durchbruch offenbart beispielhaft die Schrift zum DE-U-8609693. Auf einen Teil des Umfanges des Spannringes ist dort eine Schwalbenschwanzführung für einen daran verschieblichen Lagerbock vorgesehen, in welchem parallel zur Achse des Durchbruchs schwenkbar eine Dosenlibelle lagert. Der Lagerbock kann an einer vorwählbaren Stelle der Schwalbenschwanzführung klemmend festgelegt werden. Wird die Dosenlibelle im Lagerbock verschwenkt, kann an einer Skala der Bohrrichtungswinkel abgelesen werden. Angesichts dessen ist es erfinderisch, das eingangs beschriebene Werkzeug so zu gestalten, daß es -- wie gesagt: zusätzlich -- als ein solcher Handgriff verwendet zu werden vermag; für diese Verwendung wird gesondert Schutz begehrt.

Nach einem weiteren Merkmal der Erfindung verläuft in der Meßebene parallel zu deren Seitenkanten eine Meßnut, die sich bevorzugt in einer zur Meßebene senkrechten Mittelebene des Werkzeuges befindet. Zudem sollen an wenigstens einer geraden Seitenkante des Haltegriffes Maßeinheiten in der Art eines Metermaßes vorgesehen sein, mit denen man Längenmessungen durchführen kann.

Dank dieser Maßgaben dient das Werkzeug dazu, Kanten eines Gegenstandes zu messen; die Meßnut nimmt die zu messende Kante auf und erlaubt ein durch diese geführtes Gleiten der beschriebenen Meßeinrichtung. Darüber hinaus aber kann man -- bei Verwendung des Werkzeuges als Haltegriff -- mit seiner Röhrenlibelle die Bohrebene der Handbohrmaschine bestimmen.

Zum Festlegen der Röhrenlibelle ragt vorteilhafterweise von jener der die Meßebene anbietenden Rückenfläche gegenüberliegenden Frontfläche des Werkzeuges eine zapfenartige --eine Stirnfläche mit zentrischer Einformung aufweisende --Anformung ab, wobei diese Einformung einen in ihr drehbaren Steckzapfen der schüsselartigen Trageinheit aufnimmt; deren Umfangswand übergreift einen sie führenden Randabschnitt der Anformung und ist an ihr drehbar gehalten. Bei einer besonderen Ausgestaltung kann jener Steckzapfen mit einer Drehraste versehen sein, die das Drehen in einem vorgegebenen Winkel und eine Raststellung nach dessen Einstellung bewirkt.

Um das Anlegen des Werkzeuges mit einer der Seitenflächen an einer zu messenden Fläche zu gewährleisten, soll die Trageinheit zumindest an einer Längskante sich innerhalb der Außenfläche des Werkzeuges befinden. Die Röhrenlibelle überlagert die schüsselartige Trageinheit diametral und überragt einends deren Umfangsrand; auch dies dient der erwähnten Anlagefähigkeit jener einen Seitenfläche.

Als günstig hat sich eine der Trageinheit zugeordnete Meßskala erwiesen, dank deren die Neigungslage der Röhrenlibelle -- und damit auch der angeschlossenen Bohrmaschine -- vorbestimmt zu werden vermag.

Nach einem anderen Merkmal der Erfindung trägt die Röhrenlibelle an ihrer außerhalb des Umfangrandes der Trageinheit angeordneten Stirnfläche eine Dosenlibelle. Dank deren ist es für einen Benutzer besser möglich, Neigungslagen des Werkzeuges oder Haltegriffes aus verschiedenen Blickrichtungen zu erkennen.

Es ist bekannt, zur Vorbestimmung eines Bohrabstandes Bohrmaschinen mit einem L-förmig gestalteten Abstandhalter zu versehen, der parallel zur Maschinenachse vorsteht und mit seinem kurzen Arm einer Wandfläche od.dgl. anliegt. Erfindungsgemäß ist nun ein solcher Abstandhalter im Werkzeug integriert; in diesem verläuft parallel zur Meßfläche ein Längskanal als Aufnahme für jenen L-förmigen Abstandhalter in dessen Ruhelage. In seiner Gebrauchsstellung sitzt der Abstandhalter verschieblich in einem von mehreren Stecklöchern des Haltegriffes, welche parallel zur Mittelachse des Durchbruches vorgesehen sind. Der Längskanal soll im übrigen in einer Aufnahmenut für den kürzeren Arm des L-förmigen Abstandhalters münden, die an der Stirnfläche des Haltegriffes vorgesehen ist.

Bei weiteren Ausführungsformen des erfindungsgemäßen Werkzeuges ist entweder in dessen Griffbereich eine verschließbare Vertiefung für Zubehörteile vorgesehen, und/oder es befindet sich am durchbruchfernen Griffende ein Hohlraum für das Gehäuse eines Rollbandmaßes; letzteres kann zum Messen beliebig aus dem Haltegriff gezogen werden und ist außer Gebrauch in ihm aufgehoben.

Ein anderes Merkmal der Erfindung bietet an, daß die Firstfläche des Haltegriffes eine Klemmnut für einen darin axial verschiebbar gehaltenen Abstandhalter, einen Stabprofil oder einen Markierungsstift aufweist, um mit diesem Meß- oder Markierungsvorgänge durchführen zu können. Wenn - - wie erfindungsgemäß -- im rechten Winkel zur Klemmnut die oben beschriebene Längsnut für den Abstandhalter oder das Stabprofil verläuft, begrenzen die freien Enden des Markierungsstiftes und des Winkelarms von Abstandhalter oder Stabprofil eine veränderbare Maßstrecke in der Art einer Schublehre. Jene Meßstrecke aber kann auch als Radius eines Zirkels dienen.

Bei einer anderen Ausgestaltung bietet der Haltegriff bzw. das Werkzeug wenigstens einen zur Längsnut in einem Winkel verlaufenden Steckkanal für das Stabprofil an; letzteres bestimmt dann mit der Meßfläche des Werkzeuges oder weiteren -- jeweils aus einem Steckkanal ragenden -- Stabprofilen Anlagewinkel. Mehrere radial von einem Steckloch ausgehende Steckkanäle bilden einen Fächer für wenigstens zwei zueinander winkelig stehende Stabprofile für Meßvorgänge. Jenes Steckloch verläuft dann parallel zur Mittelachse des Haltegriffdurchbruches.

Im Rahmen der Erfindung liegt auch ein Haltegriff, der einen etwa mittigen Durchgangskanal enthält, dessen Durchmesser geringfügig kürzer ist als die Breite des Haltegriffes. Dieser Durchgangskanal erstreckt sich von dem durchbruchfernen Griffende bis zu einer Mündung in einer Seitenfläche des Haltegriffes und bildet die Verbindung zwischen einem Staubsaugerschlauch sowie einem an jene Mündung angeschlossenen Schlauch einer Saugdüse; mit dieser soll entstehendes Bohrklein am Ort der Entstehung abgesaugt werden können. Dazu ist die Mündung dieses Durchgangskanals zwischen dem Durchbruch und dem Griffende vorgesehen, also unterhalb der im Durchbruch sitzenden Bohrmaschine. In das dem Griffende zugeordnete Ende des Durchgangskanals wird ein Kupplungsstück für den Staubsaugerschlauch eingefügt, d.h. jede Dimension eines solchen Staubsaugerschlauches kann mit dem Haltegriff verbunden werden.

Es ergibt sich also eine sehr effiziente Möglichkeit, die Bohrstelle staubfrei zu halten. Zudem wird dieser Haltegriff nach Abnahme der Schlauchelemente wieder zum Meßwerkzeug.

Das erfindungsgemäße Werkzeug ist als Haltegriff für Rechts- und Linkshänder geeignet und bietet Hilfen an sowohl beim waagerechten und senkrechten Bohren als auch beim Bohren in einem Winkel. Man kann mit diesem Haltegriff beliebige Messungen -- und diese auch an Kanten -- durchführen.

Das übliche Suchen nach Zusatzeinrichtungen und Meßhilfen entfällt dank eines Aufnahmeraumes des Haltegriffes bzw. der Ausbildung seines Zusatzelementes als Zubehörgehäuse.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:
- Fig. 1:: eine Draufsicht auf einen Teil einer Handbohrmaschine mit Haltegriff und Distanzhalter;
- Fig. 2:: eine Seitenansicht des Haltegriffes der Fig. 1;
- Fig. 3:: die teilweise geschnittene Rückenansicht des Haltegriffes;
- Fig. 4:: die Frontansicht des Haltegriffes;
- Fig. 5:: die teilweise geschnittene Draufsicht auf den Haltegriff;
- Fig. 6:: eine gegenüber Fig. 5 vergrößerte Draufsicht mit angefügter Aufsteckkappe;
- Fig. 7.: eine teilweise geschnittene Frontansicht zu Fig. 6;
- Fig. 8, 9:: Schrägsicht und teilweise geschnittene Seitenansicht der Aufsteckkappe;
- Fig. 10:: das untere Ende eines anderen Haltegriffs, in Seitenansicht;
- Fig. 11:: eine teilweise Rückenansicht und Seitenansicht eines weiteren Haltegriffes;
- Fig. 12:: eine Seitenansicht zu Fig. 11;
- Fig. 13:: eine teilweise Seitenansicht eines anderen Haltegriffes;
- Fig. 14:: die Frontansicht zu Fig. 13;
- Fig. 15:: eine Seitenansicht einer als Haltegriff einsetzbaren Meßeinrichtung;
- Fig. 16:: die Draufsicht auf die Firstfläche der Meßeinrichtung der Fig. 15;
- Fig. 17:: ein Teil einer Frontansicht der Fig. 15 nach deren Pfeil XVII;
- Fig. 18:: einen Teil der Fig. 15 in anderer Betriebsstellung;
- Fig. 19,20:: gegenüber Fig. 15 verkleinerte Wiedergaben zweier Ausgestaltungen der Meßeinrichtung mit unterschiedlichen Zurüstteilen;
- Fig. 21:: den unteren Bereich der Fig. 20;
- Fig. 22:: eine Schrägsicht auf die Meßeinrichtung mit zugeordnetem Schmiegeschenkel.

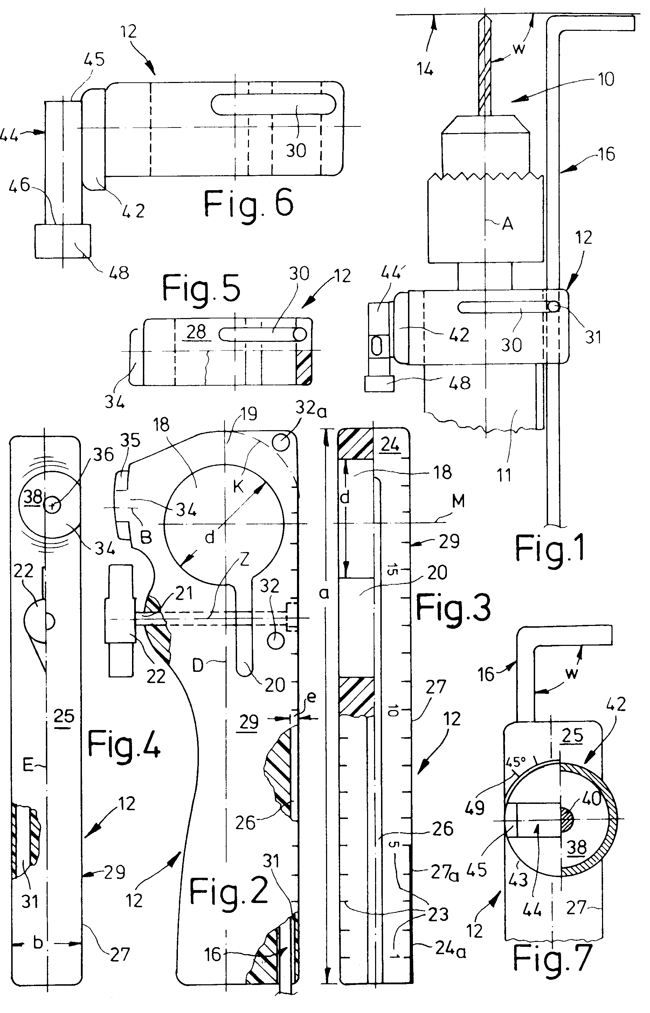

Eine in Fig. 1 nur teilweise wiedergegebene Handbohrmaschine 10 wird u. a. mittels eines Haltegriffes 12 in der dargestellten Bohrstellung gehalten, in welcher der Abstand zu einer durch eine Gerade bei 14 angedeuteten Bauwerkswand sowie ein Winkel w von 90° zwischen dieser und der Längsachse A der Handbohrmaschine 10 mittels eines stabartigen Abstandhalters 16 L-förmiger Ausbildung vorgewählt werden; der Winkelarm 16ₐ des Abstandhalters 16 liegt jener Bauwerkswand 14 an. Der Abstandhalter 16 ist im Haltegriff 12 gelagert und kann auch nicht dargestellte Querschnitte --beispielsweise einen polygonen -- aufweisen.

Das als Haltegriff 12 eingesetzte Werkzeug einer Länge a von etwa 200 mm und einer Breite b von etwa 25 mm weist in seinem in Fig. 2 bis 4 oberen Abschnitt einen zylindrischen Durchbruch 18 als Einschubraum eines Durchmessers d von beispielsweise 43 mm (Euro-Norm) auf, von dem -- parallel zu einer Durchmessergeraden D -- ein Schlitz 20 ausgeht. Die Mittelachse M des zylindrischen Durchbruchs 18 fällt in die Längsachse A der eingesetzten Handbohrmaschine 10.

Da der Haltegriff 12 aus elastischem Werkstoff geformt ist, kann der Durchmesser d des Durchbruches 18 durch das Anziehen einer bei 22 angedeuteten Schraube mit -- eine Längsachse Z bestimmendem -- Schraubschaft 21, welcher den Haltegriff 12 durchsetzt, begrenzt verändert werden und dann einen entsprechend zylindrischen Abschnitt 11 der Handbohrmaschine 10 in der Art eines Spannringes klemmend umfangen.

Die Rückenfläche 24 des Haltegriffes 12 ist zur Anlage an eine zu messende Fläche als Meßebene ausgebildet und enthält neben Angaben zu Maßeinheiten 23 -- parallel zu den geraden Eckkanten 27 des Haltegriffes 12 und zur Durchmessergeraden D -- eine mittige Längsnut 26 etwa dreiecksförmigen Querschnittes, in welche eine zu messende Kante eingelegt werden kann. Die Nutentiefe e mißt etwa 2,5 bis 3,0 mm und ist etwas kürzer als die Nutenbreite f.

In Fig. 3 ist zudem bei 24ₐ ein Sockelbereich der Rückenfläche 24 mit ausgeprägten, also nicht gerundeten Kanten 27ₐ zu erkennen, der ein Aufsetzen auf eine zu messende Ebene gestattet.

In die Stirnfläche des Haltegriffes 12 bzw. die Oberfläche 28 des jenen Durchbruch 18 in Fig. 2 bis 4 nach oben hin begrenzenden teilringartigen Griffabschnittes 19 ist --parallel zu den Seitenflächen 29 des Haltegriffes 12 --eine endliche Nut 30 eingeformt, die durch einen parallel zur Durchmessergeraden D verlaufenden Längskanal 31 im Haltegriff 12 fortgesetzt wird und den Winkelarm 16ₐ jenes Abstandhalters 16 in dessen Ruhelage aufnimmt. Zum Gebrauch wird der Abstandhalter 16 aus dem Längskanal 31 gezogen und in die Gebrauchsstellung in ein -- jenem Schlitz 20 benachbartes -- bohrungsartiges Steckloch 32 eingeschoben, in dem es klemmend verschiebbar ruht.

In Fig. 2 ist im rechten oberen Eck des Haltegriffes 12 ein weiteres Steckloch 32ₐ zu erkennen, in welchem der Abstandhalter 16 ebenfalls verschiebbar lagern kann. Die Querschnittsform der Stecklöcher 32, 32ₐ des Längskanals 31 und der Aufnahmenut 30 ist jener des Abstandhalters 16 angepaßt. Im übrigen deutet die dort erkennbare teilkreisförmige Kontur K ein anderes Ausführungsbeispiel des Haltegriffes 12 an, bei welchem jener eckförmige Abschnitt samt Steckloch 32ₐ fehlt, d.h. ein Teilring den Durchbruch 18 begrenzt.

An der zur Anlage der Hand eines Benutzers geschwungenen Frontseite 25 des Haltegriffes 12 ist insbesondere in Fig. 2, 4 in deren oberem Bereich eine zapfenartige Anformung 34 des Haltegriffs 12 zu erkennen mit einer in Fig. 4 außerhalb einer -- durch den Haltegriff 12 gelegten -- Mittelebene E vorgesehenen zylindrischen Einformung 36 in der kreisförmigen Stirnfläche 38 der Anformung 34; die Einformung 36 nimmt hier einen Steckzapfen 40 einer schüsselartigen Aufsteckkappe 42 auf, welche -- jener Stirnfläche 38 anliegend -- in der Einformung 36 mit ihrem Steckzapfen 40 drehbar gehalten wird. An der Aufsteckkappe 42 ist eine stiftartige oder quaderförmige Röhrenlibelle 44 festgelegt, deren eine Stirnfläche 45 innerhalb der Kreisfläche der Aufsteckkappe 42 liegt -- somit auch innerhalb der Frontfläche 25 -- und deren andere Stirnfläche 46 in Fig. 1 --den Umfangsrand 43 der drehbaren Aufsteckkappe 42 überragend -- eine Dosenlibelle 48 trägt.

Der Aufsteckkappe 42 ist in Fig. 7 eine periphere Meßskala 49 mit Gradeinteilung zugeordnet, dank deren die Neigungslage der Aufsteckkappe 42 bzw. der Röhrenlibelle 44 festgestellt werden kann.

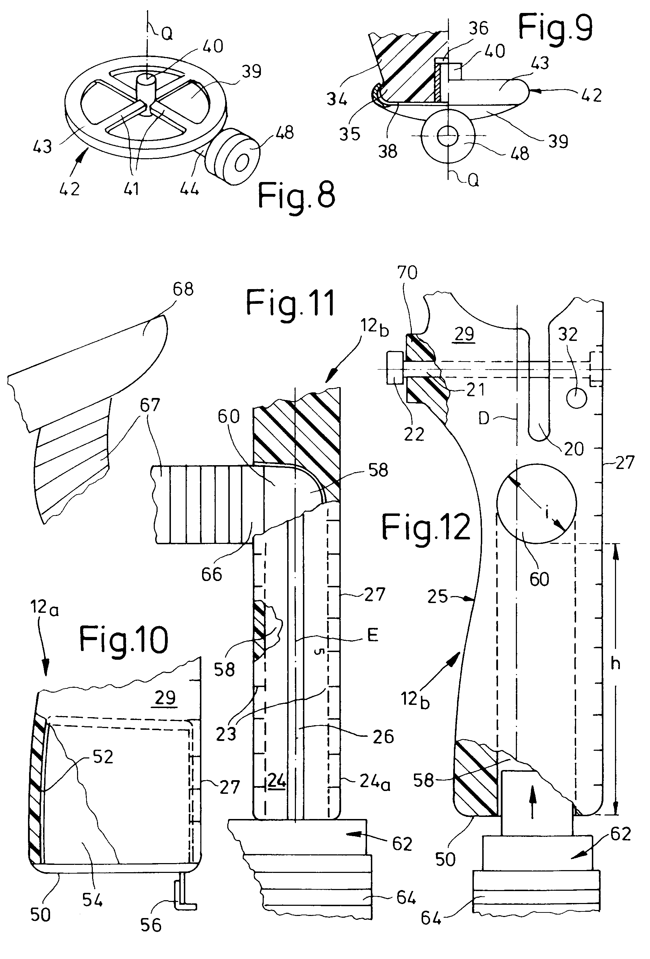

Die schüsselartige Aufsteckkappe 42 ist nach Fig. 8, 9 ein Kunststofformteil mit vom Steckzapfen 40 ausgehenden Radialrippen 41, an die eine Bodenfläche 39 sowie jener Umfangsrand 43 angeformt sind. Der querschnittlich einwärts gekrümmte Umfangsrand 43 umgreift einen Randabschnitt 35 der zapfenartigen Anformung 34 des Haltegriffes 12 und wird so an der Anformung 34 gehalten.

Nicht dargestellt ist eine Ausführungsform der Aufsteckkappe 42 mit in den Steckzapfen 40 oder den Randabschnitt 35 integriertem Rastmechanismus; dieser fixiert beim Drehen um die Kappendrehachse die Aufsteckkappe 42 beispielsweise bei 0°, 45° sowie in weiteren Stufen von jeweils 45°, was das Einstellen von Winkeln erleichtert.

Es wird deutlich, daß dieser Haltegriff 12 nicht nur als Handhabe für eine Handbohrmaschine 10 eingesetzt werden kann, sondern auch eine Meßeinrichtung darstellt, die ohne Bohrmaschine eine Aufgabe zu erfüllen vermag.

Das Werkzeug bzw. der Haltegriff 12ₐ der Fig. 10 ist am Griffende 50 mit einem quaderförmigen Hohlraum 52 zur Aufnahme eines in einem Gehäuse 54 untergebrachten Rollbandmaßes 56 ausgestattet. Dieses kann parallel zur Durchmessergeraden D entrollt und dann für Meßzwecke eingesetzt werden. Auch ist es möglich, das Gehäuse 54 zeitweilig aus dem Hohlraum 52 herauszunehmen.

Der Haltegriff 12_{b} der Fig. 11, 12 weist einen in Längsrichtung verlaufenden Durchgangskanal 58 auf, der in Abstand h von der Griffstirn 50 zu einer Seitenfläche 29 des Haltegriffes 12_{b} hin gekrümmt ist und an einer Mündung 60 mit Durchmesser i endet. An der Griffstirn 50 ist bei 62 ein Kupplungsstück zu erkennen, das einerseits in den Durchgangskanal 58 paßt sowie andernends für einen Schlauch 64 eines nicht dargestellten Staubsaugers kalibriert ist und es erlaubt, den Schlauch 64 an den Durchgangskanal 58 anzuschließen. Dessen seitliche Mündung 60 nimmt ein Kupplungsende 66 eines Wellschlauches 67 auf, der Teil einer Saugdüse 68 ist; mit dieser wird Bohrklein bei dessen Entstehen abgefördert.

Der Schraubschaft 21 der Schraube 22 durchsetzt in Fig. 12 eine zylindrische Anformung 70 als Schaftführung, die von der geschwungenen Frontfläche 25 abragt.

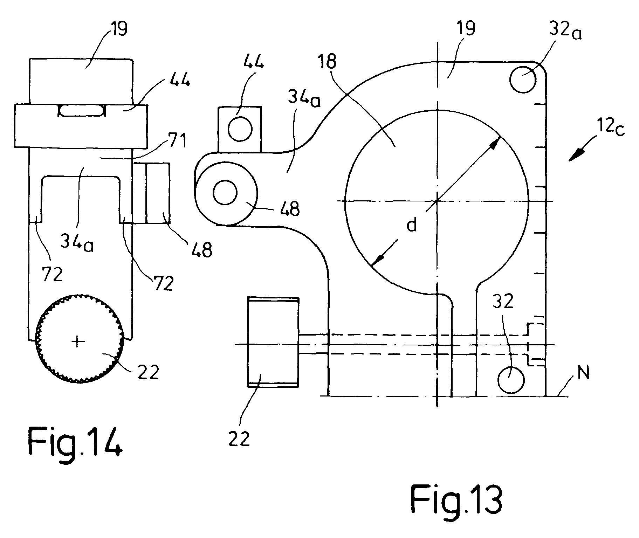

In Fig. 13, 14 ist ein Haltegriff 12_{c} zu erkennen, der auch als Ring ausgebildet sein und dann an der Linie N enden kann. Seine Anformung 34ₐ ist querschnittlich rinnenartig und trägt auf seiner Firstwand 71 die Röhrenlibelle 44 und an einem der Profilschenkel 72 die Dosenlibelle 44.

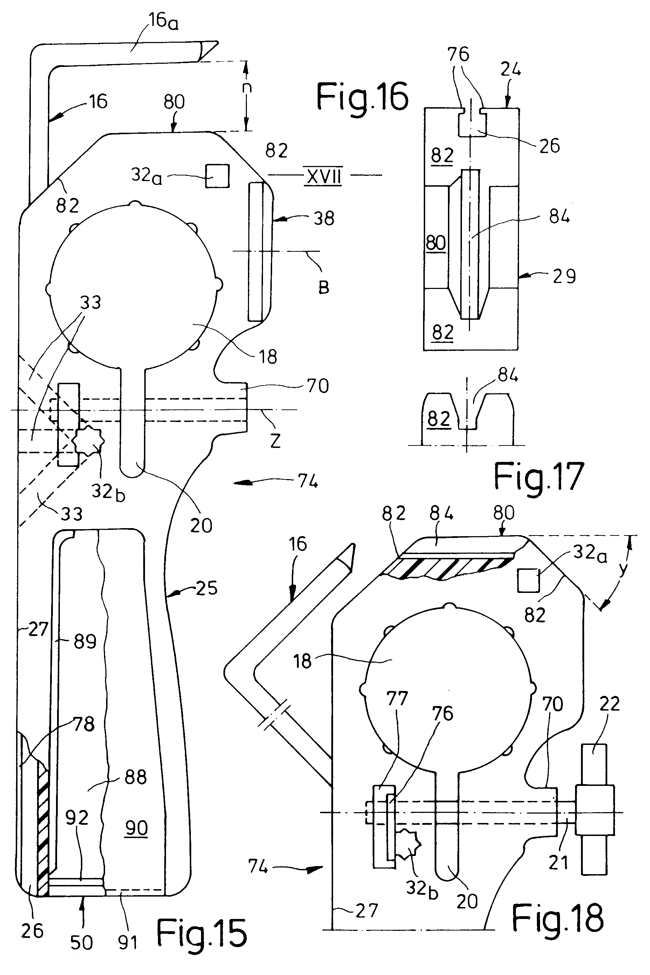

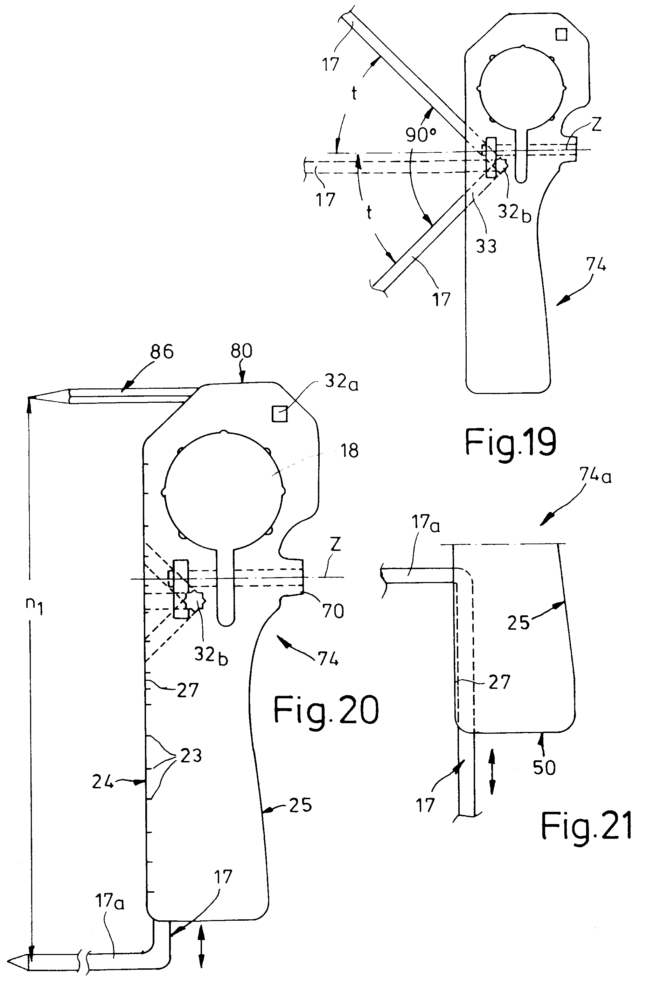

Das in Fig. 15 in etwa natürlicher Größe dargestellte --auch als Haltegriff einsetzbare -- Werkzeug dient vor allem als Meßeinrichtung 74 und weist unterhalb des Durchbruches 18 ein umrißlich sternartiges Steckloch 32_{b} auf, von dem sowohl parallel zur Längsachse Z der Schraube 22 als auch in Winkeln t von etwa 45° zu ihr Steckkanäle 33 für den Abstandhalter 16 oder ein ähnliches Stabprofil 17 ausgehen (Fig. 19); mit letzterem können Anlagewinkel für die Handbohrmaschine 10 an Kanten von Werkstücken bestimmt werden.

Jenes sternförmige Steckloch 32_{b} wird gemäß Fig. 18 an einer Seite von einer Anschlagplatte 76 begrenzt, die in einem Rechteckloch 77 der Meßeinrichtung 74 lagert und mit dem Schraubschaft 21 verbunden ist; diese Anschlagplatte 76 verhilft dem Abstandhalter 16 bzw. dem Stabprofil 17 zu einem festen Klemmsitz.

Der Abstandhalter 16 kann auch in einer Längsnut 26 etwa quadratischem Querschnitts der Rückenfläche 24 verschiebbar lagern und wird darin gemäß Fig. 15,16 durch Längsrippen 78 gehalten.

Fig. 15 zeigt das Meßmaß n einer Schublehre zwischen dem Winkelarm 16ₐ des Abstandhalters 16 und der Firstfläche 80 der Meßeinrichtung 74; dieses Dickenmaß ist am Ende des Abstandhalters 16 ablesbar, das mit den Maßeinheiten 23 der Meßebene 24 zusammenwirkt. Beidseits der Firstfläche ist jeweils eine Neigungsfläche 82 mit einem Neigungswinkel y von 45° angesetzt.

Eine Kammnut 84 in der Firstfläche 80 der Meßeinrichtung 74 lassen die Fig. 16,17,18 deutlich werden; der Querschnitt der Kammnut 84 verjüngt sich abwärts, da diese Kammnut 84 eines der Stabprofile 17 oder einen in Fig. 20 angedeuteten Markierungsstift 86 klemmend halten soll. Da das in Fig. 20 wiedergegebene gewinkelte Stabprofil 17 an ein Werkstück haltend angepreßt oder aber in dieses eingedrückt werden kann, sind dank des Markierungsstiftes 86 beispielsweise Kreiskonturen darstellbar; in diesem Falle erfolgt die Radiuseinstellung -- Abstand n₁ -- ebenfalls mit Hilfe der Maßeinheiten 23 an der Rückenfläche oder Meßebene 24.

Neben der Meßebene 24 bzw. der Längsnut 26 ist in Fig. 15 in die Grifffläche eine Vertiefung 88 eingeformt, die mit einem Klemmdeckel 90 verschließbar ist; dieser liegt seitlichen Rippen 79 auf und schließt mit einem abgewinkelten Abschnitt 91 an eine endwärtige Schwelle 92 der Vertiefung 88 an. Diese Vertiefung 88 dient der Aufnahme von Zubehörteilen.

Nicht erkennbar ist, daß bei der Ausführung der Meßeinrichtung 74ₐ -- Fig. 21 -- die oben erwähnten Längsrippen 76 fehlen, so daß der Winkelarm 17ₐ des Stabprofils 17 im Bereich der Meßebene 24 beliebig verschoben werden kann.

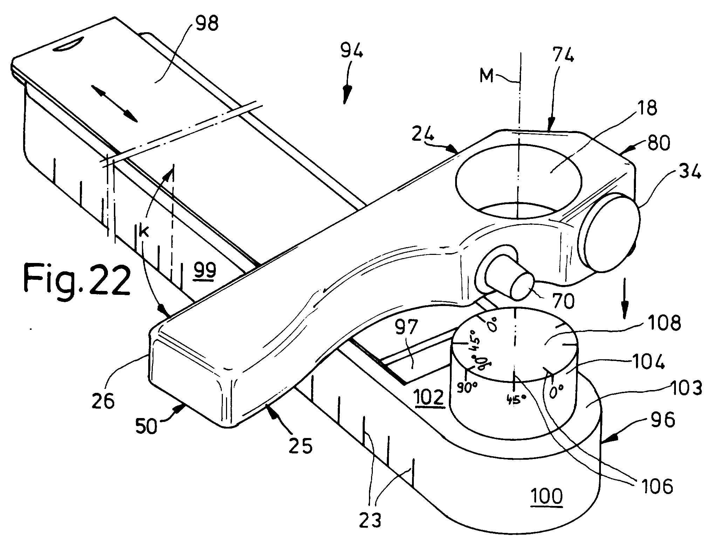

Die Meßeinrichtung 74,74ₐ -- oder das Werkzeug 12ₐ,12_{b} --können gemäß Fig. 22 mit einem leistenähnlichen Gegenelement eine Schmiege 94 bilden, nämlich einen Universalwinkelmesser mit zueinander verstellbaren Schenkeln; diese Schmiege 94 bildet beispielhaft einen Stellwinkel insbesondere für die Metall- oder Holzbearbeitung oder beim Zeichnen und Anreißen.

Das leisten- oder lattenartige Gegenelement der Schmiege 94 der Fig. 22 besteht aus einem hohlen Zubehörgehäuse 96, dessen firstwärts offener Innenraum 97 durch einen Schubdeckel 98 verschlossen werden kann. An der/den eine Meßebene bildenden Seitenfläche/n 99 des Zubehörgehäuses 96 sind Maßeinheiten 23 zu erkennen.

Nahe einer die Seitenflächen 99 verbindenden teilkreisförmig gebogenen Stirnfläche 100 des Zubehörgehäuses 96 ist auf dessen Firstplatte 102 unter Bildung einer teilringartigen Auflageschulter 103 ein Zylinderstumpf oder -zapfen 104 angeformt; dessen Mittelachse fällt bei aufgesteckter Meßeinrichtung 74,74ₐ mit der Mittelachse M von deren Durchbruch 18 zusammen, von dem der Zylinderstumpf 104 aufgenommen wird und in dem er drehbar lagert. Eine Skaleneinteilung 106 auf der Stirnfläche 108 des Zylinderstumpfes 104 erlaubt das exakte Einstellen eines Winkels k zwischen den Schenkeln 74,96 der Schmiege 94.

Die beiden Schenkel 12,12ₐ,12_{b},74,74ₐ und 96 können aus unterschiedlichen Werkstoffen geformt sein, bevorzugt wird ein spritzfähiger Kunststoff.

## Patentansprüche

1. Werkzeug mit Meßeinrichtung/en und wenigstens einer linearen Anlagekante sowie einem Durchbruch zum Anschluß an ein weiteres Werkzeug oder Werkzeugteil, wobei die Meßeinrichtung (23,24) lineare Längenmeßeinheiten an einer Meßebene (24) und/oder wenigstens eine Libelle (44,48) enthält sowie ihr Durchbruch (18) als Lager für ein darin drehbares und lösbar angebrachtes Gegenelement (104) des weiteren Werkzeuges oder Werkzeugteils (96) ausgebildet ist.

2. Werkzeug nach Anspruch 1, dadurch gekennzeichnet, daß das weitere Werkzeug (96) als Aufnahmegehäuse für Zubehörteile mit wenigstens einer linearen Längenmeßeinheit (23,99) ausgebildet sowie mit einem zylindrischen Zapfen (104) als Gegenelement für den Durchbruch (18) des ersten Werkzeuges (12,12ₐ bis 12_{c};74,74ₐ) versehen ist, wobei gegebenenfalls der Zapfen (104) an seiner Stirnfläche (108) mit einer Gradeinteilung (106) versehen ist.

3. Werkzeug nach Anspruch 1, dadurch gekennzeichnet, daß es in der Form eines Haltegriffes (12,12ₐ bis 12_{c};74,74ₐ) ausgestaltet sowie zumindest eine seiner Außenflächen (24,29) als Meßebene ausgebildet ist, wobei der Durchbruch (18) zur Aufnahme des Gegenelementes (11,104) bevorzugt einen größenveränderbaren Durchmesser (d) aufweist, wobei gegebenenfalls an der einer Meßebene gegenüberliegenden Außenfläche (25) eine drehbare Trageinheit (42) für die parallel zur Außenfläche verlaufende Libelle (44) angeordnet ist.

4. Werkzeug nach Anspruch 3, dadurch gekennzeichnet, daß in der Meßebene (24) parallel zu deren Seitenkanten (27) eine Meßnut (26) verläuft und/oder die Meßnut (26) in einer zur Meßebene (24) senkrechten Mittelebene (E) des Haltegriffes (12, 12ₐ, 12_{b}, 12_{c}, 12_{d}, 12ₑ) verläuft.

5. Werkzeug nach einem der Ansprüche 1 bis 4, dadurch gekennzeichnet, daß die Meßebene (24) eine Schmalseite des als Haltegriff ausgebildeten Werkzeugs (12, 12ₐ, 12_{b}, 12_{d}, 12ₑ) ist und/oder daß an wenigstens einer geraden Seitenkante (27) Maßeinheiten (23) in der Art eines Metermaßes vorgesehen sind.

6. Werkzeug nach einem der Ansprüche 1 bis 5, dadurch gekennzeichnet, daß von der der Meßebene (24) gegenüberliegenden Frontebene (25) des Werkzeuges (12_{c}) ein angeformtes Profil (34ₐ) abragt, das parallel zur Mittelachse (M) des Durchbruches (18) die Röhrenlibelle (44) und dazu rechtwinkelig eine Dosenlibelle (48) trägt.

7. Werkzeug nach einem der Ansprüche 1 bis 6, dadurch gekennzeichnet, daß von der der Meßebene (24) gegenüberliegenden Frontebene (25) des Werkzeuges (12, 12ₐ, 12_{b}, 12_{d}, 12ₑ) eine zapfenartige, eine Stirnfläche (38) mit zentrischer Einformung (36) aufweisende Anformung (34) abragt, wobei die Einformung einen in ihr drehbaren Steckzapfen (40) der schüsselartigen Trageinheit (42) aufnimmt, deren Umfangswand (43) einen Randabschnitt (35) der Anformung übergreift.

8. Werkzeug nach einem der Ansprüche 1 bis 7, dadurch gekennzeichnet, daß die Trageinheit (42) zumindest an einer Längskante (27) sich innerhalb des von der Außenfläche (25) begrenzten Werkzeuges (12, 12ₐ, 12_{b}, 12_{d}, 12ₑ) befindet und/oder, daß die Röhrenlibelle (44) die schüsselartige Trageinheit (42) diametral überlagert und wenigstens einends deren Umfangsrand (43) überragt, wobei gegebenenfalls die Röhrenlibelle (44) an ihrer außerhalb des Umfangsrandes (43) der Trageinheit (42) angeordneten Stirnfläche (46) eine Dosenlibelle (48) trägt.

9. Werkzeug nach einem der Ansprüche 3 bis 8, dadurch gekennzeichnet, daß der drehbaren Trageinheit (42) bzw. ihrer Umfangswand (43) eine stehende Winkelskala (49) zugeordnet ist, und/oder, daß zwischen ihm und der Trageinheit (42) ein Rastmechanismus angeordnet und mit ihm die Drehung der Trageinheit stufenweise einstellbar ist.

10. Werkzeug nach wenigstens einem der Ansprüche 1 bis 9, dadurch gekennzeichnet, daß in ihm parallel zur Meßfläche (24) ein Längskanal (31) zur Aufnahme eines stabartigen L-förmigen Abstandhalters (16) in dessen Ruhelage vorgesehen ist, wobei gegebenenfalls der Abstandhalter (16) oder das Stabprofil (17) in Gebrauchsstellung in einem Steckloch (32, 32ₐ) des Werkzeuges (12, 12ₐ, 12_{b}) sitzt, welches etwa parallel zur Mittelachse (M) des Durchbruches (18) verläuft und/oder der Längskanal (31) in einer Aufnahmenut (30) für den kürzeren Arm (16ₐ,17ₐ) des L-förmigen Abstandhalters (16) oder Stabprofils (17) mündet, die an der Stirnfläche (28) des Werkzeuges (12, 12ₐ, 12_{b}) vorgesehen ist.

11. Werkzeug nach wenigstens einem der Ansprüche 1 bis 10, dadurch gekennzeichnet, daß es in seinem Griffteil eine verschließbare Vertiefung (80) für Zubehörteile und/oder am durchbruchfernen Griffende (50) einen Hohlraum (52) für das Gehäuse (54) eines Rollbandmaßes (56) aufweist.

12. Werkzeug nach wenigstens einem der Ansprüche 1 bis 11, dadurch gekennzeichnet, daß seine Firstfläche (80) eine Klemmnut (84) für einen Abstandhalter (16), ein Stabprofil (17) oder einen Markierungsstift (86) aufweist, wobei gegebenenfalls im rechten Winkel zur Klemmnut (84) die Längsnut (26) für den Abstandhalter (16) oder das Stabprofil (17) verläuft sowie die freien Enden des Markierungsstiftes (86) und des Winkelarms (16ₐ,17ₐ) von Abstandhalter (16) oder Stabprofil (17) eine veränderbare Meßstrecke (n₁) begrenzen.

13. Werkzeug nach wenigstens einem der Ansprüche 1 bis 12, dadurch gekennzeichnet, daß das Werkzeug (12_{d},12ₑ) zumindest einen zur Längsnut (26) in einem Winkel verlaufenden Steckkanal (33) für das Stabprofil (17) aufweist, wobei gegebenenfalls die Steckkanäle (33) radial von einem Steckloch (32,32_{b}) ausgehen, das parallel zur Mittelachse (M) des Durchbruches (18) verläuft.

14. Werkzeug nach wenigstens einem der Ansprüche 1 bis 13, dadurch gekennzeichnet, daß es einen etwa mittigen Durchgangskanal (58) enthält, der sich von dem durchbruchfernen Griffende (50) bis zu einer Mündung (60) in einer Seitenfläche (29) des Werkzeuges (12_{b}) erstreckt als Verbindung eines am Griffende angeschlossenen Staubsaugerschlauches (64) mit dem von der Mündung ausgehenden Schlauch (67) einer Saugdüse (68).

15. Werkzeug nach Anspruch 14, dadurch gekennzeichnet, daß der Durchmesser des Durchgangskanals (58) geringfügig kürzer ist als die Breite (b) des Werkzeugs (12_{b}), und/oder daß die Mündung (60) des Durchgangskanals (58) zwischen dem Durchbruch (18) und dem Griffende (50) vorgesehen ist.

16. Werkzeug nach Anspruch 14 oder 15, dadurch gekennzeichnet, daß in das dem Griffende (50) zugeordnete Ende des Durchgangskanals (58) ein Kupplungsstück (62) für den Staubsaugerschlauch (64) lösbar eingefügt ist, wobei das Kupplungsstück (62) gegebenenfalls freie Enden unterschiedlichen Durchmessers aufweist.

17. Werkzeug nach Anspruch 2, dadurch gekennzeichnet, daß das weitere Werkzeug (96) als gestreckter Hohlquader mit firstwärtigem Verschlußdeckel (98) ausgebildet ist, von dessen den Verschlußdeckel aufnehmenden Firstplatten (102) der Zapfen (104) aufragt, wobei gegebenenfalls das Ende des Hohlquaders grundrißlich teilkreisförmig gestaltet ist und den Fuß des Zapfens (104) unter Bildung einer teilringartigen Auflageschulter (103) teilweise umgibt.
